(19) Europäisches Patentamt
European Patent Office
Office européen des brevets

(11) **EP 2 644 763 B1**

(12) **EUROPEAN PATENT SPECIFICATION**

(45) Date of publication and mention
of the grant of the patent:
**04.01.2017 Bulletin 2017/01**

(21) Application number: **11843149.3**

(22) Date of filing: **21.11.2011**

(51) Int Cl.:
*D04H 3/147* (2012.01)        *B32B 5/26* (2006.01)
*D01F 8/06* (2006.01)         *D04H 3/007* (2012.01)
*D04H 3/153* (2012.01)        *D04H 3/16* (2006.01)
*D04H 1/4291* (2012.01)       *B32B 5/02* (2006.01)
*B32B 7/02* (2006.01)         *D01F 6/06* (2006.01)
*A41D 13/11* (2006.01)

(86) International application number:
**PCT/JP2011/076767**

(87) International publication number:
**WO 2012/070518 (31.05.2012 Gazette 2012/22)**

(54) **SPUNBONDED NONWOVEN FABRIC LAMINATE**

SPINNVLIESLAMINAT

STRATIFIÉ DE TISSU NON-TISSÉ FILÉ-LIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2010 JP 2010262609**

(43) Date of publication of application:
**02.10.2013 Bulletin 2013/40**

(73) Proprietor: **Mitsui Chemicals, Inc.
Tokyo 105-7117 (JP)**

(72) Inventors:
• **YOKOYAMA, Tetsuya
Sodegaura-shi
Chiba 299-0265 (JP)**

• **SUZUKI, Kenichi
Sodegaura-shi
Chiba 299-0265 (JP)**

(74) Representative: **Hoffmann Eitle
Patent- und Rechtsanwälte PartmbB
Arabellastraße 30
81925 München (DE)**

(56) References cited:
EP-A1- 2 479 331        WO-A1-2004/048661
WO-A1-2009/001871       WO-A1-2009/001871
JP-A- 2009 062 667      JP-A- 2009 079 341
JP-A- 2009 209 506

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to spunbonded nonwoven fabric-laminated multilayer structures with excellent stretchability, flexibility, feel to the touch, forming properties and productivity which are multilayer structures including a nonwoven fabric containing a low crystalline polypropylene and an extensible spunbonded nonwoven fabric.

### BACKGROUND ART

Nonwoven fabrics exhibit excellent breathability and flexibility, and have recently been used widely in various applications. Nonwoven fabrics require a variety of properties in accordance with applications. Meanwhile, demands have been placed on the improvements in these properties.

For example, excellent waterproofness and moisture permeability are required for nonwoven fabrics which are used for hygiene materials such as disposable diapers and sanitary napkins, as well as for backings for poultices. In addition, stretchability and bulkiness are required depending on the sections to which the fabrics are applied.

It has been proposed that stretchability is imparted to a spunbonded nonwoven fabric by using a thermoplastic elastomer (for example, Patent Literature 1: JP-A-H07-503502) or a low crystalline polypropylene (for example, Patent Literature 2: JP-A-2009-62667, Patent Literature 3: JP-A-2009-79341) as a material for the nonwoven fabric.

Patent Literature 2 or 3 proposes that a highly crystalline polypropylene or a release agent is added to the low crystalline polypropylene in order to remedy problems such as stickiness of the spunbonded nonwoven fabric.

However, such a highly crystalline polypropylene or release agent needs to be added in a large amount to the low crystalline polypropylene in order to make sure that spunbonded nonwoven fabrics containing the low crystalline polypropylene will not adhere to various rotary units in apparatuses during steps such as embossing or to any other regions which are brought into contact with the nonwoven fabrics during production. As a result, the obtainable spunbonded nonwoven fabrics tend to have a greater residual strain and to exhibit poor stretchability.

WO 2009/001871 A1 relates to an elastic nonwoven fabric which is made of a crystalline resin composition comprising a lowly crystalline polypropylene and a highly crystalline polypropylene, characterized in that the lowly crystalline polypropylene satisfies the following (a) and (b) and the crystalline resin composition has a crystallization temperature (Tc) as measured with a differential scanning calorimeter (DSC) of 20-100 °C.

(a) When the lowly crystalline polypropylene is examined with a differential scanning calorimeter (DSC) by a method in which the polypropylene is held in a nitrogen atmosphere at -10 °C for 5 minutes and then heated at 10 °C/min, it gives a melting endotherm curve in which the melting point (Tm-D) defined as the temperature corresponding to the top of the peak observed on the most high-temperature side is 0-120 °C.
(b) The lowly crystalline polypropylene has a stereoregularity index ([mm]) of 50-90 mol%.

EP 2 479 331 A1 relates to a spunbond nonwoven fabric made of a specific crystalline resin composition having a melt flow rate of 25 to 80 g/10 min and a melting endotherm H of 65 to 100 J/g.

Citation List

Patent Literatures

Patent Literature 1: JP-A-H07-503502

Patent Literature 2: JP-A-2009-62667

Patent Literature 3: JP-A-2009-79341

### SUMMARY OF INVENTION

Technical Problem

An object of the invention is to provide a spunbonded nonwoven fabric containing a low crystalline polypropylene which has excellent forming properties, namely, exhibits remedied stickiness to various rotary units in apparatuses during steps such as embossing or to any other regions brought into contact with the nonwoven fabric during the production of the nonwoven fabric without being deteriorated in terms of stretchability, and which further has an excellent feel to the touch.

Solution to Problem

The present invention provides a spunbonded nonwoven fabric-laminated multilayer structure that includes an elastic nonwoven fabric which contains a low crystalline polypropylene satisfying (a) to (f) and an extensible spunbonded nonwoven fabric having an elongation at maximum load of not less than 50% in at least one direction, the extensible spunbonded nonwoven fabric being laminated on both surfaces of the elastic nonwoven fabric:

(a)

$$[mmmm] = 20 \text{ to } 60 \text{ mol\%},$$

(b)

$$[rrrr]/(1 - [mmmm]) \leq 0.1,$$

(c)

$$[rmrm] > 2.5 \text{ mol\%},$$

(d)

$$[mm] \times [rr]/[mr]^2 \leq 2.0,$$

(e) mass average molecular weight (Mw) = 10,000 to 200,000,
(f) molecular weight distribution (Mw/Mn) < 4

wherein the extensible spunbonded nonwoven fabric is characterized by comprising
concentric sheath-core conjugate fibers wherein the core includes a lower MFR propylene polymer having MFR in the range of 1 to 1000 g/10 min and the sheath includes a higher MFR propylene polymer having MFR in the range of 1 to 1000 g/10 min with the difference in MFR being not less than 1 g/10 min, or
an olefin polymer composition including 80 to 99 wt% of a crystalline propylene polymer and 20 to 1 wt.-% of a high-density polyethylene.

Advantageous Effects of Invention

The spunbonded nonwoven fabric-laminated multilayer structure of the invention is fabricated in such a manner that an elastic nonwoven fabric containing a low crystalline polypropylene is produced while laminating an extensible spunbonded nonwoven fabric to both surfaces of the nonwoven fabric. According to this configuration, it is possible to prevent the nonwoven fabric from adhering to various rotary units in apparatuses during steps such as embossing or to any other regions brought into contact with the nonwoven fabric during production, thus improving productivity. The obtainable spunbonded nonwoven fabric-laminated multilayer structure has an excellent feel to the touch due to the lamination of the extensible spunbonded nonwoven fabric(s) and still exhibits excellent properties such as stretching properties, flexibility and durability of the elastic nonwoven fabric containing a low crystalline polypropylene.

BRIEF DESCRIPTION OF DRAWING

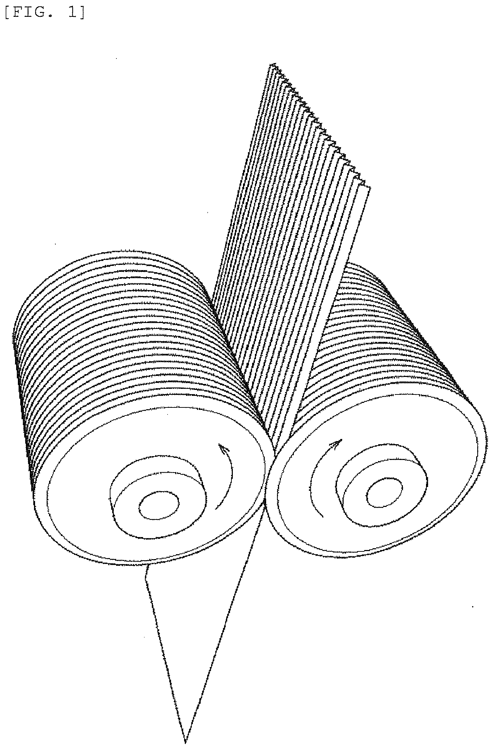

[FIG. 1] FIG. 1 is a schematic view depicting a gear drawing machine for drawing a spunbonded nonwoven fabric-laminated multilayer structure according to the present invention.

## DESCRIPTION OF EMBODIMENTS

(Low crystalline polypropylene)

An elastic nonwoven fabric constituting the inventive spunbonded nonwoven fabric-laminated multilayer structure contains a low crystalline polypropylene satisfying (a) to (f) described below.

The elastic nonwoven fabric of the invention may be a nonwoven fabric produced by any of known methods such as spunbonding, melt blowing and flash spinning. Of such nonwoven fabrics, a spunbonded nonwoven fabric is preferable because the nonwoven fabric is formed of continuous fibers.

The low crystalline polypropylene in the invention is a polymer satisfying the following requirements (a) to (f).

$$(a) \quad [mmmm] = 20 \text{ to } 60 \text{ mol\%}$$

The development of stickiness is suppressed when the meso pentad fraction [mmmm] of the low crystalline polypropylene is not less than 20 mol%. A meso pentad fraction of not more than 60 mol% ensures that an excessively high degree of crystallinity is not reached and good elastic recovery is exhibited. The meso pentad fraction [mmmm] is preferably 30 to 50 mol%, and more preferably 40 to 50 mol%.

The meso pentad fraction [mmmm], the racemic pentad fraction [rrrr] described later and the racemic meso racemic meso pentad fraction [rmrm] described later are the meso fraction, the racemic fraction and the racemic meso racemic meso fraction, respectively, of pentad units in the polypropylene molecule chains measured with respect to methyl group signals in a 13C-NMR spectrum in accordance with the method proposed in A. Zambelli, et al., "Macromolecules, 6, 925 (1973)". The larger the meso pentad fraction [mmmm], the higher the stereoregularity. The triad fractions [mm], [rr] and [mr] described later also are calculated according to the above method.

A 13C-NMR spectrum may be measured using the following apparatus under the following conditions in accordance with the assignment of peaks proposed in A. Zambelli, et al., "Macromolecules, 8, 687 (1975)".

Apparatus: JNM-EX400 13C-NMR spectrometer manufactured by JEOL Ltd.

Method: Complete proton decoupling method
Concentration: 220 mg/ml
Solvent: 90:10 (by volume) mixed solvent of 1,2,4-trichlorobenzene and deuterated benzene
Temperature: 130°C
Pulse width: 45°
Pulse interval: 4 seconds
Integration: 10000 times

(Calculation formulae)

$$M = m/S \times 100$$

$$R = \gamma/S \times 100$$

$$S = P\beta\beta + P\alpha\beta + P\alpha\gamma$$

S: signal intensity of methyl carbon atoms in side chains of all propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: racemic pentad chains: 20.7 to 20.3 ppm
m: meso pentad chains: 21.7 to 22.5 ppm

$$(b)\ [rrrr]/(1 - [mmmm]) \leq 0.1$$

The [rrrr]/[1 - mmmm] value is obtained from the above pentad fractions. This value is an index of the uniformity of regularity distribution in the low crystalline polypropylene according to the invention. An increase of this value indicates that the polymer is a mixture of high-regularity polypropylene and atactic polypropylene as is the case for conventional polypropylene produced with a known catalyst system, and stickiness occurs.

The development of stickiness of the obtainable elastic nonwoven fabric is suppressed when the low crystalline polypropylene has [rrrr]/(1 - [mmmm]) of not more than 0.1. From this viewpoint, [rrrr] / (1 - [mmmm]) is preferably not more than 0.05, and more preferably not more than 0.04.

$$(c)\ [rmrm] > 2.5\ mol\%$$

When the racemic meso racemic meso fraction [rmrm] of the low crystalline polypropylene is greater than 2.5 mol%, such a low crystalline polypropylene has an increased randomness and the obtainable elastic nonwoven fabric exhibits further improved elastic recovery. The [rmrm] value is preferably not less than 2.6 mol%, and more preferably not less than 2.7 mol%. The upper limit is usually about 10 mol%.

$$(d)\ [mm] \times [rr]/[mr]^2 \leq 2.0$$

The $[mm] \times [rr]/[mr]^2$ value is an indicator of the randomness of the low crystalline polypropylene. When the value is not more than 2.0, the obtainable elastic nonwoven fabric achieves sufficient elastic recovery and is suppressed from exhibiting stickiness. The randomness is increased as the $[mm] \times [rr]/[mr]^2$ value becomes closer to 0.25. In order to obtain sufficient elastic recovery, $[mm] \times [rr]/[mr]^2$ is preferably more than 0.25 and not more than 1.8, and more preferably 0.5 to 1.5.

(e) Mass average molecular weight (Mw) = 10,000 to 200,000

When the mass average molecular weight of the low crystalline polypropylene is not less than 10,000, such a low crystalline polypropylene exhibits a moderately low viscosity so as to suppress filament breakage during the production of the elastic nonwoven fabric. When the mass average molecular weight is not more than 200,000, such a low crystalline polypropylene exhibits a moderately high viscosity so as to achieve improved spinnability. The mass average molecular weight is preferably 30,000 to 150,000, and more preferably 50,000 to 150,000. The mass average molecular weight may be measured by a method described later.

(f) Molecular weight distribution (Mw/Mn) < 4

When the molecular weight distribution (Mw/Mn) of the low crystalline polypropylene is less than 4, the obtainable elastic nonwoven fabric is suppressed from the development of stickiness. The molecular weight distribution is preferably not more than 3.

The mass average molecular weight (Mw) is measured by gel permeation chromatography (GPC) with the following apparatus and conditions relative to polystyrenes. The molecular weight distribution (Mw/Mn) is calculated from the number average molecular weight (Mn) measured in the similar manner and the mass average molecular weight (Mw).

(GPC apparatus)

    Column: TOSO GMHHR-H(S)HT
    Detector: RI detector for liquid chromatogram, WATERS 150C

(Measurement conditions)

Solvent: 1,2,4-trichlorobenzene
Measurement temperature: 145°C
Flow rate: 1.0 ml/min
Sample concentration: 2.2 mg/ml
Injection amount: 160 $\mu$l
Calibration curve: Universal Calibration
Analysis program: HT-GPC (Ver. 1.0)

It is preferable that the low crystalline polypropylene of the invention further satisfy the following requirement (g) .

(g) With a differential scanning calorimeter (DSC), the polymer is held at -10°C for 5 minutes in a nitrogen atmosphere and is thereafter heated at a temperature increasing rate of 10°C/min. The obtained melting endothermic curve shows a melting point (Tm-D) of 0 to 120°C wherein the melting point is defined as the peak top temperature of the peak observed on the highest temperature side of the curve.

When the melting point (Tm-D) of the low crystalline polypropylene is not less than 0°C, the obtainable elastic nonwoven fabric is suppressed from the development of stickiness. Sufficient elastic recovery is obtained when the melting point is not more than 120 °C. From these viewpoints, the melting point (Tm-D) is more preferably 0 to 100°C.

The melting point (Tm-D) may be determined with a differential scanning colorimeter (DSC-7, manufactured by Perkin Elmer Co., Ltd.) by holding 10 mg of a sample at -10°C in a nitrogen atmosphere for 5 minutes, heating the sample at a temperature increase rate of 10°C/min to record a melting endothermic curve, and determining the temperature corresponding to the peak top of the peak observed on the highest temperature side of the curve.

For example, the low crystalline polypropylene according to the invention may be synthesized using a homogeneous catalyst that is generally called a metallocene catalyst such as one described in WO 2003/087172.

The low crystalline polypropylene of the invention may contain various known additives as optional components while still achieving the object of the invention. Examples of such additives include antioxidants, heat stabilizers, weather stabilizers, antistatic agents, slip agents, antifogging agents, lubricants, dyes, pigments, natural oils, synthetic oils and waxes.

(Olefin polymer)

An extensible spunbonded nonwoven fabric according to the invention is formed of an olefin polymer or an olefin polymer composition. The olefin polymer as the material is a homopolymer or a copolymer of $\alpha$-olefins such as ethylene, propylene, 1-butene, 1-hexene, 4-methyl-1-pentene and 1-octene. Specific examples include ethylene polymers such as ethylene homopolymers including high-pressure low-density polyethylene, linear low-density polyethylene (LLDPE) and high-density polyethylene (HDPE), and ethylene/$\alpha$-olefin random copolymers; propylene polymers such as propylene homopolymers and propylene/$\alpha$-olefin random copolymers with specific examples including polypropylenes (propylene homopolymers), propylene/1-butene random copolymer, propylene/ethylene random copolymer and propylene/ethylene/1-butene random copolymer; and crystalline polymers such as poly(1-butene) and poly(4-methyl-1-pentene). These olefin polymers may be used singly or as a composition including two or more kinds of polymers.

The olefin polymer of the invention may contain various known additives as optional components while still achieving the object of the invention. Examples of such additives include antioxidants, heat stabilizers, weather stabilizers, antistatic agents, slip agents, antifogging agents, lubricants, dyes, pigments, natural oils, synthetic oils and waxes.

(Propylene polymer)

The propylene polymer which may be used for the extensible spunbonded nonwoven fabric of the invention is a crystalline resin that is usually manufactured and sold under the name of polypropylene. For example, the polymer is a homopolymer of propylene or a copolymer of propylene and a very small amount of one, or two or more kinds of $\alpha$-olefins having 2 or more carbon atoms (except the C3 olefin), and preferably 2 to 8 carbon atoms (except the C3 olefin) such as ethylene, 1-butene, 1-pentene, 1-hexene, 1-octene and 4-methyl-1-pentene, and usually has a melting point (Tm) of not less than 155°C, and preferably in the range of 157 to 165°C. Alternatively, for example, the polymer is a copolymer such as a random copolymer or a block copolymer of propylene and one, or two or more kinds of $\alpha$-olefins having 2 or more carbon atoms (except the C3 olefin), and preferably 2 to 8 carbon atoms (except the C3 olefin) such as ethylene, 1-butene, 1-pentene, 1-hexene, 1-octene and 4-methyl-1-pentene, and usually has a melting point (Tm) of 130 to less than 155 °C, and preferably in the range of 130 to 150°C.

The melt flow rate (MFR: ASTM D 1238, 230 °C, 2160 g load) of the propylene polymer is not particularly limited as long as the polymer can be melt spun. The melt flow rate, however, is usually in the range of 1 to 1000 g/10 min, preferably 5 to 500 g/10 min, and more preferably 10 to 100 g/10 min.

(Olefin polymer composition)

The olefin polymer composition which may be used as the material for the extensible spunbonded nonwoven fabric of the invention usually includes the above propylene polymer in the range of 80 to 99 mass%, preferably 84 to 96 mass%, and the above ethylene polymer in the range of 20 to 1 mass%, preferably 16 to 4 mass% (wherein the propylene polymer + the ethylene polymer = 100 mass%).

The ethylene polymer added to the propylene polymer is not particularly limited, but is preferably a high-density polyethylene having a density in the range of 0. 94 to 0. 97 g/cm$^3$, more preferably 0.95 to 0.97 g/cm$^3$, and still more preferably 0.96 to 0.97 g/cm$^3$. The melt flow rate (MFR: ASTM D 1238, 190°C, 2160 g load) of the ethylene polymer is not particularly limited as long as spinning of the polymer is possible. In order for the nonwoven fabric to exhibit extensibility, however, the melt flow rate is usually in the range of 0.1 to 100 g/10 min, more preferably 0.5 to 50 g/10 min, and still more preferably 1 to 30 g/10 min.

(Elastic nonwoven fabric)

The elastic nonwoven fabric which constitutes the spunbonded nonwoven fabric-laminated multilayer structure of the invention is an elastic nonwoven fabric, preferably an elastic spunbonded nonwoven fabric, which preferably contains the aforementioned low crystalline polypropylene at not less than 50 mass%, more preferably not less than 70 mass%, still more preferably not less than 90 mass%, and most preferably not less than 99 mass%. Such an elastic spunbonded nonwoven fabric may be produced by spunbonding the low crystalline polypropylene according to a known method.

The basis weight of the elastic nonwoven fabric of the invention is usually not more than 120 g/m$^2$, preferably not more than 80 g/m$^2$, more preferably not more than 50 g/m$^2$, and still more preferably in the range of 40 to 15 g/m$^2$.

The fibers forming the elastic nonwoven fabric of the invention usually have a fiber diameter of not more than 50 $\mu$m, preferably not more than 40 $\mu$m, and more preferably not more than 30 $\mu$m.

(Extensible spunbonded nonwoven fabric)

The extensible spunbonded nonwoven fabric according to the invention is a nonwoven fabric, preferably a nonwoven fabric having substantially no elastic recovery, which is extensible with an elongation at maximum load of not less than 50%, preferably not less than 70%, more preferably not less than 100%, and most preferably not less than 150% in at least one direction.

The basis weight of the extensible spunbonded nonwoven fabric of the invention is usually not more than 120 g/m$^2$, preferably not more than 80 g/m$^2$, more preferably not more than 50 g/m$^2$, and still more preferably in the range of 40 to 5 g/m$^2$.

The fibers forming the extensible spunbonded nonwoven fabric of the invention usually have a fiber diameter of not more than 50 $\mu$m, preferably not more than 40 $\mu$m, and more preferably not more than 30 $\mu$m.

Examples of the extensible spunbonded nonwoven fabrics of the invention include nonwoven fabrics obtained from the aforementioned olefin polymer composition; spunbonded nonwoven fabrics which are composed of conjugate fibers including two or more olefin polymers selected from the above-mentioned olefin polymers and having a difference in flow-induced crystallization induction period of not less than 100 seconds, in detail, sheath-core conjugate fibers, side-by-side conjugate fibers or crimped conjugate fibers including a higher melting point propylene polymer and a lower melting point propylene polymer, as well as sheath-core conjugate fibers, side-by-side conjugate fibers or crimped conjugate fibers including a propylene polymer and an ethylene polymer selected from the above-mentioned olefin polymers; and spunbonded nonwoven fabrics which are composed of concentric sheath-core conjugate fibers wherein the core includes a lower MFR propylene polymer having MFR in the range of 1 to 1000 g/10 min and the sheath includes a higher MFR propylene polymer having MFR in the range of 1 to 1000 g/10 min with the difference in MFR being not less than 1 g/10 min, preferably not less than 15 g/10 min, more preferably not less than 30 g/10 min, and most preferably not less than 40 g/10 min.

Specific examples include spunbonded nonwoven fabrics which are obtained from an olefin polymer composition including a propylene homopolymer at 80 to 99 mass% and a high-density polyethylene at 20 to 1 mass%; spunbonded nonwoven fabrics which are composed of sheath-core conjugate fibers, side-by-side conjugate fibers or crimped conjugate fibers including a higher melting point propylene polymer, preferably propylene homopolymer, and a lower melting point propylene/$\alpha$-olefin random copolymer having the same or different MFR from each other with the melting point of the former polymer being in the range of 157 to 165°C and the melting point of the latter polymer being in the range of 130 to 150°C; and spunbonded nonwoven fabrics which are composed of concentric sheath-core conjugate fibers wherein the core includes a lower MFR propylene polymer, preferably propylene homopolymer, having MFR in the range of 1 to 200 g/10 min and the sheath includes a higher MFR propylene polymer, preferably homopolymer, having MFR in the range of 16 to 215 g/10 min with the difference in MFR being not less than 15 g/10 min.

Particularly excellent extensibility is obtained when the elongation at maximum load is not less than 110% in at least one direction. Examples of such spunbonded nonwoven fabrics exhibiting excellent extensibility include spunbonded nonwoven fabrics which are composed of concentric sheath-core conjugate fibers, side-by-side conjugate fibers or crimped conjugate fibers wherein the core includes a lower MFR and higher melting point propylene polymer, preferably propylene homopolymer, having MFR in the range of 10 to 200 g/10 min and a melting point in the range of 157 to 165°C and the sheath includes a higher MFR and lower melting point propylene/$\alpha$-olefin random copolymer having MFR in the range of 10 to 200 g/10 min and a melting point in the range of 130 to 150°C with the difference in MFR being not less than 1 g/10 min; and spunbonded nonwoven fabrics which are composed of concentric sheath-core conjugate fibers wherein the core includes a lower MFR propylene polymer, preferably propylene homopolymer, having MFR in the range of 1 to 200 g/10 min and the sheath includes a higher MFR propylene polymer, preferably propylene homopolymer, having MFR in the range of 31 to 230 g/10 min with the difference in MFR being not less than 30 g/10 min.

(Spunbonded nonwoven fabric-laminated multilayer structure)

A spunbonded nonwoven fabric-laminated multilayer structure of the invention includes the elastic nonwoven fabric containing the low crystalline polypropylene and the extensible spunbonded nonwoven fabric laminated on both surfaces of the elastic nonwoven fabric, including the surface which is brought into contact with rotary units associated with apparatuses for the manufacturing of nonwoven fabrics.

In the invention the spunbonded nonwoven fabric-laminated multilayer structure includes the extensible spunbonded nonwoven fabrics laminated on both surfaces of the elastic nonwoven fabric containing the low crystalline polypropylene. Such a preferred configuration allows for the prevention of sticking to various rotary units in apparatuses during steps such as embossing during the production of the elastic nonwoven fabric.

The spunbonded nonwoven fabric-laminated multilayer structure of the invention usually has a basis weight of not more than 360 g/m$^2$, preferably not more than 240 g/m$^2$, more preferably not more than 150 g/m$^2$, and still more preferably in the range of 120 to 15 g/m$^2$.

The constitutional ratio of the elastic nonwoven fabric to the extensible spunbonded nonwoven fabric(s) may be determined appropriately in accordance with various applications. However, the elastic nonwoven fabric:extensible spunbonded nonwoven fabric (s) (basis weight ratio) is usually in the range of 10:90 to 90:10, and preferably 50:50 to 80:20. If the basis weight ratio of the elastic nonwoven fabric is smaller than 10, the obtainable spunbonded nonwoven fabric-laminated multilayer structure tends to be markedly poor in stretchability. If the basis weight ratio thereof is in excess of 90, the probability is increased for the fibers forming the elastic nonwoven fabric to be exposed on the surface through the extensible spunbonded nonwoven fabric layer with the result that the obtainable spunbonded nonwoven fabric-laminated multilayer structure tends to be markedly deteriorated in forming properties and feel to the touch.

The spunbonded nonwoven fabric-laminated multilayer structure of the invention usually has an elongation at maximum load of not less than 100%, and preferably not less than 220% in at least one direction.

The spunbonded nonwoven fabric-laminated multilayer structure of the invention may be laminated with other layers depending on various applications. Such other layers to be laminated on the spunbonded nonwoven fabric-laminated multilayer structure of the invention are not particularly limited, and any of various kinds of layers may be laminated in accordance with applications.

Specific examples include knitted fabrics, woven fabrics, nonwoven fabrics and films. Such other layers may be laminated (bonded) onto the spunbonded nonwoven fabric-laminated multilayer structure of the invention by any known methods, for example, thermal fusion bonding methods such as hot embossing and ultrasonic fusion bonding, mechanical entangling methods such as needle punching and water jetting, bonding methods with adhesives such as hot melt adhesives and urethane adhesives, and extrusion lamination.

The nonwoven fabrics laminated to the spunbonded nonwoven fabric-laminated multilayer structure of the invention may be any known nonwoven fabrics such as spunbonded nonwoven fabrics, meltblown nonwoven fabrics, wet nonwoven fabrics, dry nonwoven fabrics, dry pulp nonwoven fabrics, flash-spun nonwoven fabrics and split-fiber nonwoven fabrics. These nonwoven fabrics may be non-stretchable nonwoven fabrics. Here, the term "non-stretchable nonwoven fabrics" refers to nonwoven fabrics which have an elongation at break of about 50% in MD (machine direction or lengthwise direction of the nonwoven fabric) or CD (cross direction or direction perpendicular to the machine direction of the nonwoven fabric) and which do not produce recovery stress after elongation.

The films laminated to the spunbonded nonwoven fabric-laminated multilayer structure of the invention are preferably breathable (moisture permeable) films in order to take advantage of the breathability and the hydrophilicity that are characteristics of the spunbonded nonwoven fabric-laminated multilayer structure of the invention. Various known breathable films may be used, with examples including films of moisture permeable thermoplastic elastomers such as polyurethane elastomers, polyester elastomers and polyamide elastomers; and porous films obtained by drawing thermoplastic resin films containing inorganic or organic fine particles to create pores in the films. Preferred thermoplastic resins used for the porous films are polyolefins such as high-pressure low-density polyethylenes, linear low-density polyethylenes (LLDPE), high-density polyethylenes, polypropylenes, polypropylene random copolymers and compositions thereof.

(Stretchable spunbonded nonwoven fabric-laminated multilayer structure)

A stretchable spunbonded nonwoven fabric-laminated multilayer structure according to the invention is a multilayer nonwoven fabric having stretchability that is obtained by drawing the above spunbonded nonwoven fabric-laminated multilayer structure.

The stretchable spunbonded nonwoven fabric-laminated multilayer structure of the invention may be obtained by drawing the spunbonded nonwoven fabric-laminated multilayer structure described above. A known drawing method may be used. The drawing method may be such that the spunbonded nonwoven fabric-laminated multilayer structure is drawn partially or entirely, or is drawn monoaxially or biaxially. For example, a stretchable spunbonded nonwoven fabric-laminated multilayer structure drawn in the machine direction (MD) may be produced by passing the partially fusion-bonded mixed fibers through two or more pairs of nip rolls. In this process, the partially fusion-bonded spunbonded nonwoven fabric-laminated multilayer structure may be drawn by operating the nip rolls at increasing rotational speeds along the machine direction. Alternatively, gear drawing may be performed using a gear drawing machine depicted in FIG. 1.

The draw ratio is preferably not less than 50%, more preferably not less than 100%, most preferably not less than 200%, and is preferably not more than 1000%, more preferably not more than 400%.

The above preferred draw ratio is preferably satisfied in the machine direction (MD) or the cross direction (CD) in the case of monoaxial drawing. In the case of biaxial drawing, the above preferred draw ratio is preferably satisfied in at least one of the machine direction (MD) and the cross direction (CD).

Upon drawing at the above draw ratio, all the (continuous) fibers forming the elastic nonwoven fabric and the extensible spunbonded nonwoven fabric are drawn. The continuous fibers forming the extensible spunbonded nonwoven fabric layer (s) are plastically deformed to become extended (longer) in accordance with the above draw ratio.

Thus, when the stress is released after the spunbonded nonwoven fabric-laminated multilayer structure is drawn, the (continuous) fibers forming the elastic nonwoven fabric undergo elastic recovery while the continuous fibers forming the extensible spunbonded nonwoven fabric are folded without producing elastic recovery. As a result, advantageously, the spunbonded nonwoven fabric-laminated multilayer structure comes to exhibit bulkiness and to be improved in flexibility and feel to the touch due to thinning of the continuous fibers forming the extensible spunbonded nonwoven fabric. Further, the continuous fibers forming the extensible spunbonded nonwoven fabric function as an extension stopper.

(Method for producing spunbonded nonwoven fabric-laminated multilayer structures)

The spunbonded nonwoven fabric-laminated multilayer structure of the invention may be produced by a known method for the production of spunbonded nonwoven fabrics using the low crystalline polypropylene as the material for the elastic nonwoven fabric and the material such as the olefin polymer for the extensible spunbonded nonwoven fabric.

In detail, the spunbonded nonwoven fabric-laminated multilayer structure may be produced using a spunbonding apparatus equipped with at least two lines of spinning units in the following manner. The olefin polymer, or two or more kinds of the olefin polymers as required are molten in an extruder, or two or more extruders as required, provided at the first-line spinning unit, and are introduced to a spinneret (die) fitted with a large number of spinning orifices (nozzles) or having sheath-core spinning orifices as required. After the materials such as the olefin polymer are extruded, the continuous olefin polymer fibers that have been melt spun are introduced into a cooling chamber and cooled with cooling air. Thereafter, the continuous fibers are drawn (attenuated) with drawing air and the resultant extensible spunbonded nonwoven fabric is deposited on a moving collection surface. The low crystalline polypropylene is them molten in an extruder provided at the second-line spinning unit, and is introduced to a spinneret (die) fitted with a large number of spinning orifices (nozzles). After the low crystalline polypropylene is extruded through the spinning orifices, the continuous low crystalline polypropylene fibers that have been melt spun are introduced into a cooling chamber and cooled with cooling air. Thereafter, the continuous fibers are drawn (attenuated) with drawing air and the resultant elastic spunbonded nonwoven fabric is deposited on the previously deposited extensible spunbonded nonwoven fabric. As required, an extensible spunbonded nonwoven fabric may be deposited in the same manner on the elastic spunbonded nonwoven fabric using the third-line spinning unit.

The temperature for melting the polymers is not particularly limited provided that the temperature is equal to or higher than the softening temperature or the melting point and is less than the thermal decomposition temperature of each polymer. Thus, the temperature for melting may be determined in accordance with the materials such as the polymers used. The die temperature may vary depending on the polymers used. For example, the die temperature may be usually set to 180 to 240°C, preferably 190 to 230°C, and more preferably 200 to 225°C in the case of a propylene polymer.

The temperature of the cooling air is not particularly limited as long as the polymer can be solidified. However, the cooling air temperature is usually in the range of 5 to 50°C, preferably 10 to 40°C, and more preferably 15 to 30°C. The speed of the drawing air is usually in the range of 100 to 10, 000 m/min, and preferably 500 to 10,000 m/min.

The multilayer structure of the extensible spunbonded nonwoven fabric and the elastic spunbonded nonwoven fabric is subjected to partial fusion bonding. The multilayer structure may be pressed into a denser structure with nip rolls before fusion bonding.

The multilayer structure may be partially fusion bonded by various known methods. Exemplary prebonding methods include ultrasonic fusion bonding, hot embossing with embossing rolls and hot air through bonding. Hot embossing is preferable because hot-embossed continuous fibers can be drawn efficiently in the drawing treatment.

In the case where the multilayer structure is partially fusion bonded by hot embossing, the embossing area ratio is usually in the range of 5 to 30%, preferably 5 to 20%, and the non-embossing unit area is not less than 0.5 mm$^2$, preferably in the range of 4 to 40 mm$^2$. The non-embossing unit area is the maximum area of a tetragon inscribed in bosses among the minimum units of non-embossing sections surrounded by bosses. Examples of the embossing shapes include circles, ellipses, ovals, squares, rhomboids, rectangles, tetragons and continuations of shapes based on these shapes.

EXAMPLES

The present invention will be described in greater detail by presenting examples hereinbelow without limiting the scope of the invention to such examples.

Properties were measured by the following methods in examples and comparative examples.

(1) Basis weight [g/m$^2$]

Test pieces 200 mm in MD and 50 mm in CD were sampled from 6 points of nonwoven fabrics such as spunbonded nonwoven fabric-laminated multilayer structures. Three sampling points were arbitrarily selected for MD and CD (6 points in total). Each of the sampled test pieces was weighed using a scale electric balance (manufactured by Kensei Co., Ltd.) to determine the mass (g). The masses of the test pieces were averaged. The average value was converted into a mass (g) per 1 m$^2$ to the first decimal place to give a basis weight [g/m$^2$] of the nonwoven fabric sample.

(2) Elongation at maximum load [%]

Five test pieces 25.0 cm in machine direction (MD) and 2.5 cm in cross direction (CD) were sampled from nonwoven fabrics such as spunbonded nonwoven fabric-laminated multilayer structures. The test pieces were subjected to a tensile test using a constant speed tensile tester with a distance between chucks of 100 mm and a stress rate of 100 mm/min. The elongation percentage of the test piece was measured at the maximum load to the test piece. The average value of the five test pieces was obtained as the elongation at maximum load.

(3) Residual strain [%]

Five pieces of nonwoven fabric 5. 0 cm in machine direction (MD) and 2.5 cm in cross direction (CD) were sampled from nonwoven fabrics such as spunbonded nonwoven fabric-laminated multilayer structures. The nonwoven fabric was drawn under conditions where the distance between chucks was 30 mm, the stress rate was 30 mm/min and the draw ratio was 100%, and was immediately thereafter returned to the original length at the same speed. A stretchable nonwoven fabric was thus obtained.

During the above process, the strain was measured when the tensile load became 0 gf. The average value of the five test pieces of nonwoven fabric was obtained to evaluate the residual strain (unit: %).

(4) Measurement of delamination strength of spunbonded nonwoven fabric-laminated multilayer structure

Five test pieces 10.0 cm in machine direction (MD) and 5.0 cm in cross direction (CD) were sampled from a spunbonded nonwoven fabric-laminated multilayer structure. Packing tape "Fabric tape No. 159" with a 50 mm width manufactured by Teraoka Seisakusho Co., Ltd. was cut with a length of 15.0 cm and was applied to the entire surface of the test piece such that the machine direction (MD) of the test piece was parallel to the longer direction of the packing tape. The packing tape was applied to both surfaces of the test piece. That is, a three-ply structure consisting of packing tape/spunbonded nonwoven fabric-laminated multilayer structure/packing tape was fabricated. The packing tapes on both sides of the three-ply structure were attached to upper and lower chucks of a low-speed tensile tester, and were pulled under conditions where the distance between the chucks was 50 mm and the stress rate was 100 mm/min, thereby measuring the delamination strength of the spunbonded nonwoven fabric-laminated multilayer structure. The peel strength values of the five test pieces were averaged to the first decimal place to give delamination strength. This measurement evaluates how strongly the layers of the spunbonded nonwoven fabric-laminated multilayer structure are bonded with each other by fusion bonding or the like.

(5) Mean coefficient of friction (MIU) and mean deviation of coefficient of friction (MMD)

Test pieces 20.0 cm in machine direction (MD) and 20.0 cm in cross direction (CD) were sampled from a spunbonded nonwoven fabric-laminated multilayer structure. With use of a friction feel tester (KES-FB-4, manufactured by KATO TECH CO., LTD.), the test pieces were tested under conditions where the frictional static load was 50 gf, the measurement speed was 1 mm/sec, and the measurement distance was 30 mm (effective integral length 20 mm). Five test pieces were used for each of the measurements in the machine direction (MD) and the cross direction (CD), and the results were averaged.

MIU indicates the degree of slipperiness of the surface of the spunbonded nonwoven fabric-laminated multilayer structure. The smaller the value, the more excellent the slipperiness and the feel to the touch.

MMD indicates the degree of smoothness of the surface of the spunbonded nonwoven fabric-laminated multilayer structure. The smaller the value, the more excellent the smoothness and the feel to the touch.

[Example 1]

(Production of low crystalline polypropylene)

To a 0.2 $m^3$ volume stainless steel reactor equipped with a stirrer were continuously supplied 20 L/h of n-heptane, 15 mmol/h of triisobutylaluminum, and 6 $\mu$mol/h in terms of zirconium of a catalytic component that had been obtained by preliminarily contacting dimethylanilinium tetrakispentafluorophenyl borate, (1,2'-dimethylsilylene)(2,1'-dimethylsilylene)-bis(3-trime thylsilylmethylindenyl)zirconium dichloride, triisobutylaluminum and propylene.

Propylene and hydrogen were supplied continuously at a polymerization temperature of 70°C such that the hydrogen concentration in the gas phase was maintained at 8 mol% and the total pressure in the reactor at 0.7 MPa·G.

To the resultant polymerization solution, 1000 ppm of SUMILIZER GP (manufactured by Sumitomo Chemical Co. , Ltd.) was added. The solvent was removed. Thus, a propylene polymer was obtained.

The obtained propylene polymer had a weight average molecular weight Mw of 1.2 $\times$ $10^4$, and Mw/Mn of 2. According to NMR, [mmmm] was 46 mol%, [rrrr] / (1 - [mmmm]) was 0. 038, [rmrm] was 2.7 mol%, and [mm] $\times$ [rr]/[mr]$^2$ was 1.5.

(Production of spunbonded nonwoven fabric-laminated multilayer structure)

A propylene homopolymer having MFR of 15 g/10 min (measured at 230°C and 2.16 kg load in accordance with ASTM D 1238), a density of 0.91 $g/cm^3$ and a melting point of 160°C (hereinafter, "polymer A") was molten using a 50 mm diameter extruder. Separately, a propylene homopolymer having MFR of 60 g/10 min (measured at 230 °C and 2.16 kg load in accordance with ASTM D 1238), a density of 0.91 $g/cm^3$ and a melting point of 160°C (hereinafter, "polymer B") was molten using a 75 mm diameter extruder. The polymers were melt spun according to a spunbonding method using a spunbonding apparatus (the length of the collection surface in the direction perpendicular to the machine direction: 800 mm) which had a spinneret (die, with 2887 orifices) capable of forming concentric sheath-core conjugate fibers wherein the core was the "polymer A" and the sheath was the "polymer B" under conditions where the resin temperature and the die temperature were both 215°C, the cooling air temperature was 20°C, and the drawing air speed was 3750 m/min. Thus, an extensible spunbonded nonwoven fabric was deposited on the collection surface as a first layer which was composed of concentric sheath-core conjugate fibers with a core/sheath weight ratio of 10/90.

Next, the low crystalline polypropylene was molten using a single screw extruder with a screw diameter of 75 mm. Thereafter, the polymer was melt spun onto the surface of the deposit according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a second layer was deposited. During this step, the low crystalline polypropylene exhibited very good spinnability.

Next, sheath-core conjugate fibers similar to those of the first layer were deposited as a third layer in the same manner. The resultant three-layer deposit was subjected to a thermal pressure treatment using embossing rolls (embossing area ratio: 18%, embossing temperature: 70°C) to give a spunbonded nonwoven fabric-laminated multilayer structure which had a total basis weight of 78.0 g/m$^2$, the basis weight of the first layer and that of the third layer being each 19.5 g/m$^2$, the basis weight of the elastic nonwoven fabric layer as the second layer being 39.0 g/m$^2$. (The weight fraction of the elastic nonwoven fabric layer to the total was 50%.)

The spunbonded nonwoven fabric-laminated multilayer structure obtained as described above exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the above extensible spunbonded nonwoven fabric (single layer) are also described in Table 1. The spinnability during the production of the extensible spunbonded nonwoven fabric was very good.

[Example 2]

Test pieces 30 cm in machine direction (MD) and 25 cm in cross direction (CD) were cut out from the spunbonded nonwoven fabric-laminated multilayer structure obtained in Example 1. The test piece was inserted into a gear processing machine as depicted in FIG. 1 such that the CD of the test piece was parallel to the rotational direction of the rolls. Thus, a stretchable spunbonded nonwoven fabric-laminated multilayer structure drawn in the MD (machine direction) by the gear was obtained. The gear rolls included in the gear processing machine each had a diameter of 200 mm and gear pitches of 2.5 mm, and were adjusted such that the depth of the engagement of the rolls became 4.5 mm. The stretchable spunbonded nonwoven fabric-laminated multilayer structure achieved a further improvement in residual strain.

[Example 3]

A spunbonded nonwoven fabric-laminated multilayer structure was produced in the same manner as in Example 1, except that the total basis weight was 51 g/m$^2$, the basis weight of the first layer and that of the third layer were each 12.8 g/m$^2$, and the basis weight of the elastic nonwoven fabric layer as the second layer was 25.5 g/m$^2$.

The spunbonded nonwoven fabric-laminated multilayer structure exhibited good forming properties substantially without sticking to the surface of metal rolls during the embossing step. Further, a roll of the nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength.

For reference, the spinnability and the mechanical properties of the extensible spunbonded nonwoven fabric (single layer) are also described in Table 1. The spinnability during the production of the extensible spunbonded nonwoven fabric was very good.

[Example 4]

A spunbonded nonwoven fabric-laminated multilayer structure was produced in the same manner as in Example 1, except that the total basis weight was 42 g/m$^2$, the basis weight of the first layer and that of the third layer were each 10.5 g/m$^2$, and the basis weight of the elastic nonwoven fabric layer as the second layer was 21.0 g/m$^2$.

The spunbonded nonwoven fabric-laminated multilayer structure exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the extensible spunbonded nonwoven fabric (single layer) are also described in Table 1. The spinnability during the production of the extensible spunbonded nonwoven fabric was very good.

[Example 5]

A spunbonded nonwoven fabric-laminated multilayer structure was produced in the same manner as in Example 1, except that the total basis weight was 50 g/m$^2$, the basis weight of the first layer and that of the third layer were each 10.0 g/m$^2$, and the basis weight of the elastic nonwoven fabric layer as the second layer was 30.0 g/m$^2$. (The weight fraction of the elastic nonwoven fabric layer to the total was 60%.)

The spunbonded nonwoven fabric-laminated multilayer structure exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the extensible spunbonded nonwoven fabric (single layer) are also described in Table 1. The spinnability during the production of the extensible spunbonded nonwoven fabric was very good.

[Example 6]

A spunbonded nonwoven fabric-laminated multilayer structure was produced in the same manner as in Example 1, except that the total basis weight was 30 g/m$^2$, the basis weight of the first layer and that of the third layer were each 10.0 g/m$^2$, and the basis weight of the elastic nonwoven fabric layer as the second layer was 10.0 g/m$^2$. (The weight fraction of the elastic nonwoven fabric layer to the total was 33%.) The spunbonded nonwoven fabric-laminated multilayer structure exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the extensible spunbonded nonwoven fabric (single layer) are also described in Table 1. The spinnability during the production of the extensible spunbonded nonwoven fabric was very good.

[Example 7]

An olefin polymer composition was prepared by mixing 92 mass% of a propylene homopolymer having MFR of 60 g/10 min (measured at 230°C and 2.16 kg load in accordance with ASTM D 1238), a density of 0.91 g/cm$^3$ and a melting point of 160°C and 8 mass% of a high-density polyethylene (hereinafter, abbreviated to "HDPE") having MFR of 5 g/10 min (measured at 190 °C and 2.16 kg load in accordance with ASTM D 1238), a density of 0.97 g/cm$^3$ and a melting point of 134°C.

The olefin polymer composition was molten using a 75 mm diameter extruder. Thereafter, the composition was melt spun according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, an extensible spunbonded nonwoven fabric was deposited as a first layer on the collection surface.

Next, the low crystalline polypropylene was molten using a single screw extruder with a screw diameter of 75 mm. Thereafter, the polymer was melt spun onto the surface of the deposit according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a second layer was deposited. During this step, the low crystalline polypropylene exhibited very good spinnability.

Further, the same olefin polymer composition as the first layer was deposited as a third layer in the same manner. The resultant three-layer deposit was subjected to a thermal pressure treatment using embossing rolls (embossing area ratio: 18%, embossing temperature: 70°C) to give a spunbonded nonwoven fabric-laminated multilayer structure which had a total basis weight of 78.0 g/m$^2$, the basis weight of the first layer and that of the third layer being each 19.5 g/m$^2$, the basis weight of the elastic nonwoven fabric layer as the second layer being 39.0 g/m$^2$. (The weight fraction of the elastic nonwoven fabric layer to the total was 50%.)

The spunbonded nonwoven fabric-laminated multilayer structure obtained as described above exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the above extensible spunbonded nonwoven fabric (single layer) are also described in Table 1. The spinnability during the production of the extensible spunbonded nonwoven fabric was good.

[Example 8]

A spunbonded nonwoven fabric-laminated multilayer structure was produced in the same manner as in Example 7, except that the total basis weight was 50 g/m$^2$, the basis weight of the first layer and that of the third layer were each 12.5 g/m$^2$, and the basis weight of the elastic nonwoven fabric layer as the second layer was 25.0 g/m$^2$.

The spunbonded nonwoven fabric-laminated multilayer structure exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 1.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the extensible spunbonded nonwoven fabric (single layer) are also described in Table 1. The spinnability during the production of the extensible spunbonded nonwoven fabric was good.

[Table 1]

[Table 1]

| Forms | Items | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Elastic nonwoven fabric (a) | Resin | - | | Multilayer | Multilayer | Multilayer | Multilayer | Multilayer | Multilayer | Multilayer | Multilayer |
| | | | | Low crystalline PP | Low crystalline PP | Low crystalline PP | Low crystalline PP | Low crystalline PP | Low crystalline PP | Low crystalline PP | Low crystalline PP |
| | Proportion | [wt%] | | 50 | 50 | 50 | 50 | 60 | 33 | 50 | 50 |
| | Basis weight | [g/m²] | | 39.0 | 39.0 | 25.5 | 21.0 | 30.0 | 10.0 | 39.0 | 25.0 |
| | Spinnability | - | | Very good | Very good | Very good | Very good | Very good | Very good | Very good | Very good |
| Extensible spunbonded nonwoven fabric (b) | Configuration | - | | Sheath-core | Sheath-core | Sheath-core | Sheath-core | Sheath-core | Sheath-core | Blend | Blend |
| | Resin | - | | PP/PP | PP/PP | PP/PP | PP/PP | PP/PP | PP/PP | h-PP + HDPE | h-PP + HDPE |
| | Basis weight | [g/m²] | | 19.5 | 19.5 | 12.8 | 10.5 | 10.0 | 10.0 | 19.5 | 12.5 |
| | Elongation at maximum load | [%] | | 167 | 167 | 158 | 156 | 155 | 155 | 144 | 117 |
| | Spinnability | - | | Very good | Very good | Very good | Very good | Very good | Very good | Good | Good |

(continued)

| Forms | Items | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|
| Spunbonded nonwoven fabric-laminated multilayer structure (b/a/b) | | | Multilayer | Multilayer | Multilayer | Multilayer | Multilayer | Multilayer | Multilayer | Multilayer |
| | Embossing temperature | [°C] | 70/70 | 70/70 | 70/70 | 70/70 | 70/70 | 70/70 | 70/70 | 70/70 |
| | Total basis weight | [g/m$^2$] | 78 | 78 | 51 | 42 | 50 | 30 | 78 | 50 |
| | Elongation at maximum load | [%] | 253 | 253 | 227 | 223 | 223 | 236 | 252 | 243 |
| | Residual strain | [%] | 20 | 11 | 26 | 23 | 22 | 22 | 22 | 23 |
| | Delamination strength | [N/50 mm] | 7.8 | 7.8 | 7.7 | 7.7 | 7.7 | 7.7 | 4.8 | 6.3 |
| | Sticking to bosses | - | O | O | O | O | O | O | O | O |
| | Roll blocking | - | O | O | O | O | O | O | O | O |
| | MIU | - | 0.22 | 0.22 | - | 0.27 | 0.22 | 0.22 | 0.27 | 0.23 |
| | MMD | - | 0.01 | 0.01 | - | 0.01 | 0.01 | 0.01 | 0.01 | 0.01 |

[Example 9]

A spunbonded nonwoven fabric-laminated multilayer structure was produced in the same manner as in Example 7, except that the total basis weight was 100 g/m$^2$, the basis weight of the first layer and that of the third layer were each 10.0 g/m$^2$, and the basis weight of the elastic nonwoven fabric layer as the second layer was 80.0 g/m$^2$. (The weight fraction of the elastic nonwoven fabric layer to the total was 80%.)

The spunbonded nonwoven fabric-laminated multilayer structure exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 2.

The obtained spunbonded nonwoven fabric-laminated multilayer structure exhibited good results in terms of elongation at maximum load, residual strain and delamination strength. MIU and MMD were both small, indicating that the surface was slippery and smooth.

For reference, the spinnability and the mechanical properties of the extensible spunbonded nonwoven fabric (single layer) are also described in Table 2. The spinnability during the production of the extensible spunbonded nonwoven fabric was good.

[Example 10]

An olefin polymer composition was prepared by mixing 92 mass% of a propylene/ethylene random copolymer having MFR of 60 g/10 min (measured at 230°C and 2.16 kg load in accordance with ASTM D 1238), a density of 0.87 g/cm$^3$ and a melting point of 143°C and 8 mass% of a high-density polyethylene having MFR of 5 g/10 min (measured at 190 °C and 2.16 kg load in accordance with ASTM D 1238), a density of 0.97 g/cm$^3$ and a melting point of 134°C.

The olefin polymer composition was molten using a 75 mm diameter extruder. Thereafter, the composition was melt spun according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, an extensible spunbonded nonwoven fabric was deposited as a first layer on the collection surface.

Next, the low crystalline polypropylene was molten using a single screw extruder with a screw diameter of 75 mm. Thereafter, the polymer was melt spun onto the surface of the deposit according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a second layer was deposited. During this step, the low crystalline polypropylene exhibited very good spinnability.

Further, the same olefin polymer composition as the first layer was deposited as a third layer in the same manner. The resultant three-layer deposit was subjected to a thermal pressure treatment using embossing rolls (embossing area ratio: 18%, embossing temperature: 70°C) to give a spunbonded nonwoven fabric-laminated multilayer structure which had a total basis weight of 79 g/m$^2$, the basis weight of the first layer and that of the third layer being each 19.8 g/m$^2$, the basis weight of the elastic nonwoven fabric layer as the second layer being 39.5 g/m$^2$. (The weight fraction of the elastic nonwoven fabric layer to the total was 50%.)

The spunbonded nonwoven fabric-laminated multilayer structure obtained as described above exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 2.

The obtained spunbonded nonwoven fabric-laminated multilayer structure exhibited good results in terms of elongation at maximum load and residual strain. MIU and MMD were both small, indicating that the surface was slippery and smooth.

For reference, the spinnability and the mechanical properties of the above extensible spunbonded nonwoven fabric (single layer) are also described in Table 2. The spinnability during the production of the extensible spunbonded nonwoven fabric was good.

[Example 11] (Example not falling within the scope of the invention as claimed)

A propylene homopolymer having MFR of 60 g/10 min (measured at 230°C and 2.16 kg load in accordance with ASTM D 1238), a density of 0.91 g/cm$^3$ and a melting point of 160°C (hereinafter, "polymer B") was molten using a 50 mm diameter extruder. Separately, a propylene/ethylene random copolymer having MFR of 60 g/10 min (measured at 230°C and 2.16 kg load in accordance with ASTM D 1238), a density of 0.87 g/cm$^3$ and a melting point of 143°C (hereinafter, "polymer C") was molten using a 75 mm diameter extruder. The polymers were melt spun according to a spunbonding method using a spunbonding apparatus (the length of the collection surface in the direction perpendicular to the machine direction: 800 mm) which had a spinneret (die, with 2887 orifices) capable of forming side-by-side conjugate fibers wherein the "polymer B" and the "polymer C" were adjacent to each other under conditions where the resin temperature and the die temperature were both 210°C, the cooling air temperature was 20°C, and the drawing air speed was 3750 m/min. Thus, an extensible spunbonded nonwoven fabric was deposited on the collection surface as a first layer which was composed of side-by-side conjugate fibers with a polymer B/polymer C mass ratio of 30/70. The conjugate fibers had crimpability.

Next, the low crystalline polypropylene was molten using a single screw extruder with a screw diameter of 75 mm. Thereafter, the polymer was melt spun onto the surface of the deposit according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a second layer was deposited. During this step, the low crystalline polypropylene exhibited very good spinnability.

Next, crimpable side-by-side conjugate fibers similar to those of the first layer were deposited as a third layer in the same manner. The resultant three-layer deposit was subjected to a thermal pressure treatment using embossing rolls (embossing area ratio: 18%, embossing temperature: 90°C) to give a spunbonded nonwoven fabric-laminated multilayer structure which had a total basis weight of 80 g/m$^2$, the basis weight of the first layer and that of the third layer being each 20.3 g/m$^2$, the basis weight of the elastic nonwoven fabric layer as the second layer being 40.5 g/m$^2$. (The weight fraction of the elastic nonwoven fabric layer to the total was 50%.)

The spunbonded nonwoven fabric-laminated multilayer structure obtained as described above exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 2.

The obtained spunbonded nonwoven fabric-laminated multilayer structure exhibited good results in terms of elongation at maximum load and residual strain. MIU and MMD were both small, indicating that the surface was slippery and smooth.

For reference, the spinnability and the mechanical properties of the above extensible spunbonded nonwoven fabric (single layer) are also described in Table 2. The spinnability during the production of the extensible spunbonded nonwoven fabric was very good.

[Comparative Example 1]

The low crystalline polypropylene was molten using a single screw extruder with a screw diameter of 75 mm. Thereafter, the polymer was melt spun according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210 °C, the cooling air temperature was 20°C, and the drawing air speed was 3750 m/min. Thus, fibers were deposited onto the collection surface. The deposit was subjected to a thermal pressure treatment using embossing rolls (embossing area ratio: 18%, embossing temperature: 40°C) to give an elastic nonwoven fabric which had a basis weight of 90 g/m$^2$. During this step, the low crystalline polypropylene exhibited very good spinnability.

The nonwoven fabric obtained as described above failed to achieve good forming properties, and became stuck to a marked extent to the surface of metal rolls during the embossing step. Further, a roll of the elastic nonwoven fabric was difficult to unroll due to the occurrence of roll blocking (a phenomenon in which superposed nonwoven fabrics adhere to each other to cause the blockage of the roll).

The results of the measurements with respect to the properties of the nonwoven fabric are described in Table 2.

The obtained nonwoven fabric exhibited good results in terms of elongation at maximum load and residual strain. However, MIU and MMD were both large, indicating that the surface was non-slippery and the nonwoven fabric was poor in smoothness.

[Comparative Example 2]

An olefin polymer composition was prepared by mixing 92 mass% of a propylene homopolymer having MFR of 60 g/10 min (measured at 230°C and 2.16 kg load in accordance with ASTM D 1238), a density of 0.91 g/cm$^3$ and a melting point of 160°C and 8 mass% of a high-density polyethylene (hereinafter, abbreviated to "HDPE") having MFR of 5 g/10 min (measured at 190 °C and 2. 6 kg load in accordance with ASTM D 1238), a density of 0.97 g/cm$^3$ and a melting point of 134°C.

The olefin polymer composition and the low crystalline polypropylene were separately molten using a 50 mm diameter extruder and a 75 mm diameter extruder, respectively. These materials were then melt spun according to a spunbonding method using a spunbonding apparatus (the length of the collection surface in the direction perpendicular to the machine direction: 800 mm) which had a spinneret (die) under conditions where the resin temperature and the die temperature were both 210°C, the cooling air temperature was 20°C, and the drawing air speed was 3750 m/min. Thus, a web of mixed continuous fibers was deposited on the collection surface which included continuous fibers composed of the olefin polymer composition and continuous fibers composed of the low crystalline polypropylene. The deposit was subjected to a thermal pressure treatment using embossing rolls (embossing area ratio: 18%, embossing temperature: 40°C) to give a spunbonded nonwoven fabric which had a basis weight of 88 g/m$^2$. During this step, the low crystalline polypropylene exhibited very good spinnability.

The spunbonded nonwoven fabric of mixed fibers included the continuous fibers of the olefin polymer composition and the continuous fibers of the low crystalline polypropylene with a ratio of 50:50 (wt%). The above spinneret had a nozzle pattern in which orifices (i) for extruding the olefin polymer composition and orifices (ii) for extruding the low crystalline polypropylene were arranged alternately. The nozzle diameter of the orifices (i) was 0.6 mm and the nozzle diameter of the orifices (ii) was 0.75 mm. The nozzle pitches were 11 mm in the longitudinal direction and 11 mm in the lateral direction. The ratio of the numbers of nozzles was (i) : (ii) = 1:1.45. The output per orifice of the olefin polymer composition extruded through the orifices (i) was 1.06 g/(min-orifice), and the output per orifice of the low crystalline polypropylene extruded through the orifices (ii) was 0.65 g/(min-orifice).

The spunbonded nonwoven fabric obtained as described above failed to achieve good forming properties, and became stuck to a marked extent to the surface of metal rolls during the embossing step. Further, a roll of the spunbonded nonwoven fabric was difficult to unroll due to the occurrence of roll blocking (a phenomenon in which superposed nonwoven fabrics adhere to each other to cause the blockage of the roll).

The results of the measurements with respect to the properties of the nonwoven fabric are described in Table 2. The nonwoven fabric exhibited a good elongation at maximum load, but had a large residual strain and was poor in stretchability. MIU and MMD were both large, indicating that the surface was non-slippery and the nonwoven fabric was poor in smoothness.

[Comparative Example 3]

A propylene homopolymer having MFR of 60 g/10 min (measured at 230°C and 2.16 kg load in accordance with ASTM D 1238), a density of 0.91 g/cm$^3$ and a melting point of 160°C was molten using a 75 mm diameter extruder. Thereafter, the polymer was melt spun according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a spunbonded nonwoven fabric was deposited as a first layer on the collection surface.

Next, the low crystalline polypropylene was molten using a single screw extruder with a screw diameter of 75 mm. Thereafter, the polymer was melt spun onto the surface of the deposit according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a second layer was deposited. During this step, the low crystalline polypropylene exhibited very good spinnability.

Further, the same propylene homopolymer as the first layer was deposited as a third layer in the same manner. The resultant three-layer deposit was subjected to a thermal pressure treatment using embossing rolls (embossing area ratio: 18%, embossing temperature: 70°C) to give a spunbonded nonwoven fabric-laminated multilayer structure which had a basis weight of 80 g/m$^2$, the basis weight of the first layer and that of the third layer being each 20. 0 g/m$^2$, the basis weight of the elastic nonwoven fabric layer as the second layer being 40.0 g/m$^2$. (The weight fraction of the elastic nonwoven fabric layer to the total was 50%.)

The spunbonded nonwoven fabric-laminated multilayer structure obtained as described above exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The results of the measurements with respect to the properties of the spunbonded nonwoven fabric-laminated multilayer structure are described in Table 2. The spunbonded nonwoven fabric-laminated multilayer structure exhibited as low an elongation at maximum load as 40%. Consequently, the residual strain was unmeasurable because breakage occurred before the draw ratio (100%) was reached.

For reference, the spinnability and the mechanical properties of the above spunbonded nonwoven fabric (single layer) are also described in Table 2.

[Comparative Example 4]

(Synthesis of propylene/ethylene/1-butene copolymer)

A thoroughly nitrogen-purged 2000 ml volume polymerization apparatus was charged with 833 ml of dry hexane, 100 g of 1-butene, and triisobutylaluminum (1.0 mmol) at normal temperature. The inside temperature of the polymerization apparatus was increased to 40°C, and propylene was fed to increase the pressure in the system to 0.76 MPa. Thereafter, ethylene was introduced to adjust the pressure in the system to 0.8 MPa.

Subsequently, a toluene solution which contained 0.001 mmol of dimethylmethylene (3-tert-butyl-5-methylcyclopentadienyl) fluorenylzirconium dichloride and 0.3 mmol in terms of aluminum of methylaluminoxane (manufactured by Tosoh Finechem Corporation) was added to the polymerizer. Polymerization was performed for 20 minutes while maintaining the inside temperature at 40°C and the inside pressure at 0.8 MPa by introducing ethylene. The polymerization was terminated by adding 20 ml of methanol. After the polymerizer was depressurized, the polymerization solution was poured into 2 L of methanol to precipitate the polymer. The polymer was dried under vacuum at 130°C for 12 hours. The obtained polymer weighed 36.4 g and had an intrinsic viscosity [η] of 1.81 dl/g, a glass transition temperature Tg of -29°C, a propylene content of 76 mol%, an ethylene content of 17 mol%, a butene content of 8 mol%, and a molecular weight distribution (Mw/Mn) according to GPC of 2.1. In the determination of the heat of fusion by DSC, a distinct melting peak was not observed.

(Production of propylene/ethylene/1-butene copolymer composition)

A propylene/ethylene/1-butene copolymer composition was produced by mixing 5 wt% of a Mitsui's polypropylene (B101: MFR = 0.5, Tm = 165°C), 95 wt% of the above propylene/ethylene/1-butene copolymer, and 0.02 wt% relative to the total weight of a degradation agent (product name: PH25B, manufactured by NOF CORPORATION), and kneading the mixture at 200°C with a twin screw extruder.

(Production of spunbonded nonwoven fabric-laminated multilayer structure)

A propylene homopolymer having MFR of 15 g/10 min (measured at 230°C and 2.16 kg load in accordance with ASTM D 1238), a density of 0.91 g/cm$^3$ and a melting point of 160°C (hereinafter, "polymer A") was molten using a 50 mm diameter extruder. Separately, a propylene homopolymer having MFR of 60 g/10 min (measured at 230°C and 2.16 kg load in accordance with ASTM D 1238), a density of 0.91 g/cm$^3$ and a melting point of 160°C (hereinafter, "polymer B") was molten using a 75 mm diameter extruder. The polymers were melt spun according to a spunbonding method using a spunbonding apparatus (the length of the collection surface in the direction perpendicular to the machine direction: 800 mm) which had a spinneret (die, with 2887 orifices) capable of forming concentric sheath-core conjugate fibers wherein the core was the "polymer A" and the sheath was the "polymer B" under conditions where the resin temperature and the die temperature were both 215°C, the cooling air temperature was 20°C, and the drawing air speed was 3750 m/min. Thus, an extensible spunbonded nonwoven fabric was deposited on the collection surface as a first layer which was composed of concentric sheath-core conjugate fibers with a core/sheath mass ratio of 10/90.

Next, the propylene/ethylene/1-butene copolymer composition was molten using a single screw extruder with a screw diameter of 75 mm. Thereafter, the composition was melt spun onto the surface of the deposit according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, a second layer was deposited. During this step, the propylene/ethylene/1-butene copolymer composition exhibited good spinnability.

Next, sheath-core conjugate fibers similar to those of the first layer were deposited as a third layer in the same manner. The resultant three-layer deposit was subjected to a thermal pressure treatment using embossing rolls (embossing area ratio: 18%, embossing temperature: 70°C) to give a spunbonded nonwoven fabric-laminated multilayer structure which had a total basis weight of 80.0 g/m$^2$, the basis weight of the first layer and that of the third layer being each 20.0 g/m$^2$, the basis weight of the elastic nonwoven fabric layer as the second layer being 40.0 g/m$^2$. (The weight fraction of the elastic nonwoven fabric layer to the total was 50%.)

The spunbonded nonwoven fabric-laminated multilayer structure obtained as described above exhibited good forming properties substantially without sticking to the surface of metal rolls during the embossing step. Further, a roll of the spunbonded nonwoven fabric-laminated multilayer structure was easily unrolled without the occurrence of roll blocking (a phenomenon in which superposed nonwoven fabrics adhere to each other to cause the blockage of the roll).

The spunbonded nonwoven fabric-laminated multilayer structure had a markedly low delamination strength. Consequently, the layers were separated easily upon drawing, causing difficulties in the measurements of properties.

For reference, the spinnability and the mechanical properties of the above extensible spunbonded nonwoven fabric (single layer) are also described in Table 2. The spinnability during the production of the extensible spunbonded nonwoven fabric was very good.

[Comparative Example 5]

The low crystalline polypropylene was mixed with a PP masterbatch containing 5 mass% of erucamide to give a resin mixture containing 2000 ppm by mass of erucamide based on the mass of the resin mixture. The resin mixture was molten using a single screw extruder with a screw diameter of 75 mm. Thereafter, the mixture was melt spun according to a spunbonding method using a spunbonding apparatus (the length of the collection surface in the direction perpendicular to the machine direction: 800 mm) which had a spinneret (die, with 808 orifices) under conditions where the resin temperature and the die temperature were both 210°C, the cooling air temperature was 20°C, and the drawing air speed was 3750 m/min. Thus, fibers were deposited onto the collection surface. The deposit was subjected to a thermal pressure treatment using embossing rolls (embossing area ratio: 18%, embossing temperature: 40°C) to give an elastic nonwoven fabric which had a basis weight of 74 g/m$^2$. During this step, the resin mixture exhibited very good spinnability.

The nonwoven fabric obtained as described above exhibited good forming properties substantially without sticking to the surface of metal rolls during the embossing step. Further, a roll of the nonwoven fabric was easily unrolled without the occurrence of roll blocking (a phenomenon in which superposed nonwoven fabrics adhere to each other to cause the blockage of the roll).

The results of the measurements with respect to the properties of the nonwoven fabric are described in Table 2. The MIU and MMD values were large, indicating that the nonwoven fabric was unsatisfactory in feel to the touch.

[Table 2]

Table 2

| Forms | Items | | | Ex. 9 | Ex. 10 | Ex.11* | Comp. Ex. 1 | Comp. Ex. 2 | Comp. Ex. 3 | Comp. Ex. 4 | Comp. Ex. 5 |
|---|---|---|---|---|---|---|---|---|---|---|---|
| | | | | Multilayer | Multilayer | Multilayer | Single layer | Mixed fibers | Multilayer | Multilayer | Single layer |
| Elastic nonwoven fabric (a) | Resin | - | | Low crystalline PP | Low crystalline PP | Low crystalline PP | Low crystalline PP | Low crystalline PP | Low crystalline PP | Copolymer | Low crystalline PP Release agent |
| | Proportion | [wt%] | | 80 | 50 | 50 | 100 | 50 | 50 | 50 | 100 |
| | Basis weight | [g/m²] | | 80.0 | 39.5 | 40.5 | 90.0 | 44.0 | 40.0 | 40 | |
| | Spinnability | - | | Very good | Very good | Very good | Very good | Very good | Very good | Good | Very good |
| Extensible spunbonded nonwoven fabric (b) | Configuration | - | | Blend | Blend | Side-by-side | - | Blend | Non extensible nonwoven fabric | Sheath-core | - |
| | Resin | | | h-PP + HDPE | r-PP + HDPE | r-PP/h-PP | - | h-PP + HDPE | PP | PP/PP | - |
| | Basis weight | [g/m²] | | 10.0 | 19.8 | 20.3 | - | 44.0 | 20.0 | 20.0 | - |
| | Elongation at maximum load | [%] | | 110 | 122 | 80 | - | - | 30 | 155 | - |
| | Spinnability | - | | Good | Good | Very good | - | - | Very good | Very good | - |

(continued)

| | Items | | Ex. 9 | Ex. 10 | Ex. 11* | Comp. Ex. 1 | Comp. Ex. 2 | Comp. Ex. 3 | Comp. Ex. 4 | Comp. Ex. 5 |
|---|---|---|---|---|---|---|---|---|---|---|
| Forms | | | Multilayer | Multilayer | Multilayer | Single layer | Mixed fibers | Multilayer | Multilayer | Single layer |
| | Embossing temperature | [°C] | 70/70 | 70/70 | 90/90 | 40/40 | 40/40 | 70/70 | 70/70 | 40/40 |
| | Total basis weight | [g/m$^2$] | 100 | 79 | 81 | 90 | 88 | 80 | 80 | 74 |
| | Elongation at maximum load | [%] | 266 | 278 | 112 | 344 | 352 | 40 | Unmeasurable | 337 |
| | Residual strain | [%] | 16 | 16 | 25 | 7 | 46 | Unmeasurable | Unmeasurable | 14 |
| | Delamination strength | [N/50 mm] | 6.0 | - | - | - | - | - | 0.6 | - |
| Spunbonded nonwoven fabric-laminated multilayer structure (b/a/b) | Sticking to bosses | - | ○ | ○ | ○ | × | × | ○ | ○ | ○ |
| | Roll blocking | - | ○ | ○ | ○ | × | × | ○ | ○ | ○ |
| | MIU | - | 0.22 | 0.28 | 0.22 | 1.51 | 0.81 | - | - | 0.64 |
| | MMD | - | 0.01 | 0.01 | 0.01 | 0.05 | 0.05 | - | - | 0.05 |

\* Example not falling within the scope of the invention as claimed

23

Industrial Applicability

The elastic nonwoven fabrics according to the invention are suitably used for various fiber products such as disposable diapers, sanitary items, hygiene products, garment materials, bandages and wrapping materials.

**Claims**

1.  A spunbonded nonwoven fabric-laminated multilayer structure comprising an elastic nonwoven fabric which contains a low crystalline polypropylene satisfying (a) to (f) and an extensible spunbonded nonwoven fabric having an elongation at maximum load of not less than 50% in at least one direction, the extensible spunbonded nonwoven fabric being laminated on both surfaces of the elastic nonwoven fabric:

    (a)

    $$[mmmm] = 20 \text{ to } 60 \text{ mol\%}$$

    (b)

    $$[rrrr]/(1 - [mmmm]) \leq 0.1$$

    (c)

    $$[rmrm] > 2.5 \text{ mol\%}$$

    (d)

    $$[mm] \times [rr]/[mr]^2 \leq 2.0$$

    (e) mass average molecular weight (Mw) = 10,000 to 200,000
    (f) molecular weight distribution (Mw/Mn) < 4,

    wherein the extensible spunbonded nonwoven fabric is **characterized by** comprising
    concentric sheath-core conjugate fibers wherein the core includes a lower MFR propylene polymer having MFR in the range of 1 to 1000 g/10 min and the sheath includes a higher MFR propylene polymer having MFR in the range of 1 to 1000 g/10 min with the difference in MFR being not less than 1 g/10 min, or
    an olefin polymer composition including 80 to 99 wt% of a crystalline propylene polymer and 20 to 1 wt.-% of a high-density polyethylene.

2.  The spunbonded nonwoven fabric-laminated multilayer structure according to claim 1, wherein the extensible spunbonded nonwoven fabric has an elongation at maximum load of not less than 100% in at least one direction.

3.  The spunbonded nonwoven fabric-laminated multilayer structure according to claim 1 or claim 2, wherein the extensible spunbonded nonwoven fabric comprises concentric sheath-core conjugate fibers wherein the core includes a lower MFR propylene polymer having MFR in the range of 1 to 1000 g/10 min and the sheath includes a higher MFR propylene polymer having MFR in the range of 1 to 1000 g/10 min with the difference in MFR being not less than 1 g/10 min.

4.  The spunbonded nonwoven fabric-laminated multilayer structure according to claim 1 or claim 2, wherein the extensible spunbonded nonwoven fabric comprises concentric sheath-core conjugate fibers wherein the core includes a lower MFR propylene polymer having MFR in the range of 1 to 200 g/10 min and the sheath includes a higher MFR propylene polymer having MFR in the range of 16 to 215 g/10 min with the difference in MFR being not less than 15 g/10 min.

5. The spunbonded nonwoven fabric-laminated multilayer structure according to claim 1 or claim 2, wherein the extensible spunbonded nonwoven fabric comprises an olefin polymer composition including 80 to 99 wt% of a crystalline propylene polymer and 20 to 1 wt% of a high-density polyethylene.

6. The spunbonded nonwoven fabric-laminated multilayer structure according to any one of claims 1 to 5, wherein the basis weight ratio of the elastic nonwoven fabric to the extensible spunbonded nonwoven fabric or fabrics is in the range of 10:90 to 90:10.

7. A stretchable spunbonded nonwoven fabric-laminated multilayer structure obtained by drawing the spunbonded nonwoven fabric-laminated multilayer structure described in any of claims 1 to 6.

8. A fiber product that comprises a stretch member comprising the stretchable spunbonded nonwoven fabric-laminated multilayer structure of claim 7.

9. An absorbent article that comprises a stretch member comprising the stretchable spunbonded nonwoven fabric-laminated multilayer structure of claim 7.

10. A hygiene mask that comprises a stretch member comprising the stretchable spunbonded nonwoven fabric-laminated multilayer structure of claim 7.

**Patentansprüche**

1. Mehrlagige Spinnvlieslaminatstruktur, umfassend ein elastisches Vlies, das ein niedrigkristallines Polypropylen enthält, das (a) bis (f) erfüllt, und ein dehnbares Spinnvlies, das eine Dehnung bei maximaler Last von nicht weniger als 50% in mindestens eine Richtung aufweist, wobei das dehnbare Spinnvlies auf beide Oberflächen des elastischen Vlieses laminiert ist:

(a)

$$[mmmm] = 20 \text{ bis } 60 \text{ Mol-\%}$$

(b)

$$[rrrr] / (1 - [mmmm]) \leq 0,1$$

(c)

$$[rmrm] > 2,5 \text{ Mol-\%}$$

(d)

$$[mm] \times [rr] / [mr]^2 \leq 2,0$$

(e) gewichtsmittleres Molekulargewicht (Mw) = 10.000 bis 200.000
(f) Molekulargewichtsverteilung (Mw/Mn) < 4,

wobei das dehnbare Spinnvlies **dadurch gekennzeichnet ist, dass** es umfasst:

konzentrische Hülle-Kern-Konjugatfasern, wobei der Kern ein Propylenpolymer mit niedrigem MFR enthält, das einen MFR im Bereich von 1 bis 1000 g/10 Min. aufweist, und die Hülle ein Propylenpolymer mit höherem MFR enthält, das einen MFR im Bereich von 1 bis 1000 g/10 Min. aufweist, und die MFR-Differenz nicht weniger als 1 g/10 Min. ist, oder

eine Olefinpolymerzusammensetzung, die 80 bis 99 Gew.-% eines kristallinen Propylenpolymers und 20 bis 1 Gew.-% eines Polyethylens mit hoher Dichte enthält.

2. Mehrlagige Spinnvlieslaminatstruktur gemäß Anspruch 1, wobei das dehnbare Spinnvlies eine Dehnung bei maximaler Last von nicht weniger als 100% in mindestens eine Richtung aufweist.

3. Mehrlagige Spinnvlieslaminatstruktur gemäß Anspruch 1 oder Anspruch 2, wobei das dehnbare Spinnvlies konzentrische Hülle-Kern-Konjugatfasern umfasst, wobei der Kern ein Propylenpolymer mit niedrigem MFR enthält, das einen MFR im Bereich von 1 bis 1000 g/10 Min. aufweist, und die Hülle ein Propylenpolymer mit höherem MFR enthält, das einen MFR im Bereich von 1 bis 1000 g/10 Min. aufweist, und die MFR-Differenz nicht weniger als 1 g/10 Min. ist.

4. Mehrlagige Spinnvlieslaminatstruktur gemäß Anspruch 1 oder Anspruch 2, wobei das dehnbare Spinnvlies konzentrische Hülle-Kern-Konjugatfasern umfasst, wobei der Kern ein Propylenpolymer mit niedrigem MFR enthält, das einen MFR im Bereich von 1 bis 200 g/10 Min. aufweist, und die Hülle ein Propylenpolymer mit höherem MFR enthält, das einen MFR im Bereich von 16 bis 215 g/10 Min. aufweist, und die MFR-Differenz nicht weniger als 15 g/10 Min. ist.

5. Mehrlagige Spinnvlieslaminatstruktur gemäß Anspruch 1 oder Anspruch 2, wobei das dehnbare Spinnvlies eine Olefinpolymerzusammensetzung umfasst, die 80 bis 99 Gew.-% eines kristallinen Propylenpolymers und 20 bis 1 Gew.-% eines Polyethylens mit hoher Dichte enthält.

6. Mehrlagige Spinnvlieslaminatstruktur gemäß einem der Ansprüche 1 bis 5, wobei das Flächengewichtsverhältnis des elastischen Vlieses zu dem dehnbaren Spinnvlies oder dehnbaren Spinnvliesen im Bereich von 10:90 bis 90:10 ist.

7. Stretchbare mehrlagige Spinnvlieslaminatstruktur, erhalten durch das Ziehen der mehrlagigen Spinnvlieslaminatstruktur, wie in einem der Ansprüche 1 bis 6 beschrieben.

8. Faserprodukt, das ein Stretch-Element, umfassend die stretchbare mehrlagige Spinnvlieslaminatstruktur gemäß Anspruch 7, umfasst.

9. Absorbierender Artikel, der ein Stretch-Element, umfassend die stretchbare mehrlagige Spinnvlieslaminatstruktur gemäß Anspruch 7, umfasst.

10. Hygienemaske, die ein Stretch-Element, umfassend die stretchbare mehrlagige Spinnvlieslaminatstruktur gemäß Anspruch 7, umfasst.

**Revendications**

1. Structure multicouche laminée de non tissé filé-lié, comprenant un non-tissé élastique qui contient un polypropylène peu cristallin satisfaisant (a) à (f) et un non-tissé filé-lié extensible ayant un allongement à une charge maximale pas inférieure à 50% dans au moins une direction, le non-tissé filé-lié extensible étant laminé sur les deux surfaces du non-tissé élastique :

(a)

$$[mmmm] = 20 \text{ à } 60 \text{ \% en moles}$$

(b)

$$[rrrr] / (1 - [mmmm]) \leq 0{,}1$$

(c)

[rmrm] > 2,5 % en moles

(d)

$$[mm] \times [rr] / [mr]^2 \leq 2$$

(e) une masse moléculaire moyenne en masse (Mw) = 10 000 à 200 000
(f) une distribution des masses moléculaires (Mw/Mn) < 4,

dans laquelle le non-tissé filé-lié extensible est **caractérisé en ce qu'**il comprend
des fibres conjuguées gaine-noyau concentriques, où le noyau comprend un polymère de propylène à bas IFC ayant un IFC dans la plage de 1 à 1000 g/10 min, et la gaine comprend un polymère de propylène à IFC plus élevé ayant un IFC dans la plage de 1 à 1000 g/10 min, avec la différence d'IFC qui n'est pas inférieure à 1 g/10 min, ou une composition de polymère d'oléfine comprenant 80 à 99 % en poids d'un polymère de propylène cristallin et de 20 à 1 % en poids d'un polyéthylène haute densité.

2. Structure multicouche laminée de non tissé filé-lié selon la revendication 1, dans laquelle le non-tissé extensible présente un allongement à une charge maximale qui n'est pas inférieur à 100 % dans au moins une direction.

3. Structure multicouche laminée de non tissé filé-lié selon la revendication 1 ou la revendication 2, dans laquelle le non-tissé extensible comprend des fibres conjuguées gaine-noyau concentriques où le noyau comprend un polymère de propylène à bas IFC ayant un IFC dans la plage de 1 à 1000 g/10 min et la gaine comprend un polymère de propylène ayant un IFC plus élevé dans la plage de 1 à 1000 g/10 min, avec la différence d'IFC pas inférieure à 1 g/10 min.

4. Structure multicouche laminée de non tissé filé-lié selon la revendication 1 ou la revendication 2, dans laquelle le non-tissé extensible comprend des fibres conjuguées gaine-noyau concentriques où le noyau comprend un polymère de propylène à bas IFC ayant un IFC dans la plage de 1 à 200 g/10 min et la gaine comprend un polymère de propylène ayant un IFC plus élevé dans la plage de 16 à 215 g/10 min, avec la différence d'IFC pas inférieure à 15 g/10 min.

5. Structure multicouche laminée de non tissé filé-lié selon la revendication 1 ou la revendication 2, dans laquelle le non-tissé filé-lié extensible comprend une composition de polymère d'oléfine comprenant 80 à 99 % en poids d'un polymère de propylène cristallin et de 20 à 1 % en poids d'un polyéthylène haute densité.

6. Structure multicouche laminée de non tissé filé-lié selon l'une quelconque des revendications 1 à 5, dans lequel le ratio en poids de base du non-tissé élastique par rapport au non-tissé ou aux non-tissés filés-liés extensibles se situe dans la plage de 10:90 à 90:10.

7. Structure multicouche laminée de non tissé filé-lié étirable obtenue par étirement de la structure multicouche laminée de non tissé filé-lié décrite dans l'une quelconque des revendications 1 à 6.

8. Produit à base de fibres qui comprend un élément étirable comprenant la structure multicouche laminée de non-tissé filé-lié étirable selon la revendication 7.

9. Article absorbant qui comprend un élément étirable comprenant la structure multicouche laminée de non-tissé filé-lié étirable selon la revendication 7.

10. Masque hygiénique qui comprend un élément étirable comprenant la structure multicouche laminée de non-tissé filé-lié étirable selon la revendication 7.

[FIG. 1]

**EP 2 644 763 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H07503502 A
- JP 2009062667 A
- JP 2009079341 A
- WO 2009001871 A1
- EP 2479331 A1
- WO 2003087172 A

### Non-patent literature cited in the description

- **A. ZAMBELLI et al.** *Macromolecules,* 1973, vol. 6, 925
- **A. ZAMBELLI et al.** *Macromolecules,* 1975, vol. 8, 687